# EUROPÄISCHE PATENTSCHRIFT

(11) **EP 2 181 281 B1**
(45) Veröffentlichungstag und Bekanntmachung des Hinweises auf die Patenterteilung: **11.02.2015**
(21) Anmeldenummer: 08801231.5
(22) Anmeldetag: 28.08.2008
(51) Int. Cl.: F16K 35/10

(54) **DREHMOMENTSTÜTZE EINER VENTILVERRIEGELUNG**
TORQUE SUPPORT OF A VALVE LOCK
SUPPORT DE MOMENT DE ROTATION D'UN VERROU DE SOUPAPE

(30) Priorität: 29.08.2007 DE 102007040703
(43) Veröffentlichungstag der Anmeldung: 05.05.2010
(73) Patentinhaber: Haake Technik GmbH, 48691 Vreden (DE)
(72) Erfinder: SCHOPPEN, Jens, 48703 Stadtlohn (DE)
(74) Vertreter: Habbel, Hans-Georg
(86) Internationale Anmeldenummer: PCT/DE2008/001411
(87) Internationale Veröffentlichungsnummer: WO 2009/026905

(56) Entgegenhaltungen:
- EP-A- 0 942 215
- US-A- 5 664 447
- US-B1- 6 213 148

## Beschreibung

Die Erfindung bezieht sich auf eine sich am Ventil abstützende Drehmomentstütze für eine Ventilverriegelung, um eine Drehung der Verriegelung gegenüber dem Ventil zu verhindern.

Ventilverriegelungssysteme haben die Aufgabe, zu verhindern, dass das Ventil unbefugt betätigt werden kann, so dass eine unbefugte Veränderung des Zustandes des Ventiles ausgeschlossen ist.

Diese Verriegelungssysteme werden daher als gesondertes Bauteil zwischen das Ventil und die Ventilbetätigung eingeschaltet, wobei dieses gesonderte Bauteil im wesentlichen die Verbindungsmittel zwischen dem Ventilbetätigungsrad und der Ventilspindel besitzt.

Weiterhin haben Ventilverriegelungssysteme die Aufgabe, zu gewährleisten, dass nur eine festgelegte betriebliche Abfolge durchlaufen werden kann. Normalerweise arbeiten Ventilverriegelungssysteme mit mehreren Schlössern und Schlüsseln. Ventilverriegelungen können nur betätigt werden, wenn sich beide Schlüssel in der Verriegelung befinden (DE 699 00 370 T2). Dabei sind die Schlüssel individuell codiert. Ein Schlüssel mit falscher Codierung kann nicht in die Verriegelung eingeführt werden bzw. kann diese nicht freigeben. Die jeweiligen Schlüssel können nur entnommen werden, wenn sich das Ventil in einer bestimmten Position befindet. Ist ein Schlüssel entnommen, so ist der andere in der Verriegelung gefangen. Üblicherweise ist es so, dass der Schlüssel nur entnommen werden kann, wenn das Ventil ganz geöffnet ist und der andere Schlüssel nur entnommen werden kann, wenn das Ventil vollkommen geschlossen ist.

Ventilverriegelungssysteme für handbetätigte Ventile werden in Anpassung an die unterschiedlichsten im Einsatz befindlichen Spindelformen in verschiedenen Ausführungen benötigt. Der Regelfall ist der, dass bei diesen Verriegelungssystemen die Endlage eingestellt werden kann. Häufig werden für die Endlage die Positionen "Ventil ganz geöffnet" und "Ventil ganz geschlossen" gewählt, wobei aber auch andere Ventilpositionen möglich sind.

Die Verbindung zwischen der Ventilspindel und dem eigentlichen Schloß des Verriegelungssystems erfolgt dabei über eine Hohlwelle, die an ihrer Außenseite Zähne für eine Sperrklinke und in ihren Endbereichen Aufnahmen für Adapter aufweist, die dem Anschluß der Spindel einerseits und des Handrades oder Betätigungshebels andererseits dienen.

Ventilverriegelungssysteme werden überall dort eingesetzt, wo eine Ablauffolge für Ventile zur Erhöhung der Personen- und Anlagensicherheit beitragen. Häufig sind das Ölbohrinseln, Chemie- und Raffineriewerke, die Gasindustrie sowie die Anlagen der Kernenergie.

Drehmomentstützen, die mit einer Ventilverriegelung kombiniert sind, haben die Aufgabe, die Verriegelung am Ventil abzustützen. Im verriegelten Zustand muss die Drehmomentstütze bei unerlaubtem Betätigungsversuch des Ventils das Drehmoment abfangen, so dass nicht die ganze Verriegelung auf dem Ventil gedreht werden kann. Bekannt geworden ist dabei z. B. aus der gattungsgemäßen EP 0 942 215 B1 eine Anordnung, bei der ein robuster schwerer Steg vorgesehen wird und zwei Bügel, welche wie eine Klammer das Ventil umgreifen. Diese Version ist aufwendig zu installieren und zerstört das Design der Verriegelung an sich.

Der Erfindung liegt die Aufgabe zugrunde, mit möglichst wenig Bauteilen ein installationsfreundliches System zu erstellen, wobei wichtig ist, dass die Orientierung der Ventilverriegelung frei gewählt werden kann und nicht auf bestimmte Positionen beschränkt ist.

Diese der Erfndung zugrundeliegende Aufgabe wird durch die Lehre des Hauptanspruches gelöst.

Vorteilhafte Ausgestaltungen der Erfindung sind in den Unteransprüchen erläutert.

Mit anderen Worten ausgedrückt wird vorgeschlagen, dass zwei Widerlagerscheiben zum Einsatz kommen, die frei drehbar in einem Arretierring angeordnet sind, wobei der Arretierring an der Ventilverriegelung anschließen kann und dort befestigt wird. Die beiden Widerlagerscheiben sind an Riegelringen vorgesehen, die innerhalb des Arretierringes angeordnet sind und die über einen Distanzring in der Höhe festgelegt werden können und über eine an der Außenseite der Riegelringe vorgesehene Verzahnung in ihrer eingestellten Lage arretiert werden können. Diese Anordnung kann schon bei der Endmontage an der Ventilverriegelung montiert werden und durch Positionieren der Widerlagerscheiben und Festlegen dieser ist die Ventilverriegelung bereits abgestützt. Die Widerlagerscheiben stützen sich dabei an entsprechenden Vorsprüngen des Ventilkörpers ab. Es ist ersichtlich, dass die Orientierung der Verriegelung frei gewählt werden kann und dass die erfindungsgemäße Drehmomentstütze an viele Ventilkonstruktionen anpassbar ist.

Die Riegelringe sind an ihrer Außenseite gezahnt und können dadurch in ihrer Winkelstellung durch entsprechende Stellschrauben festgelegt werden.

Der Arretierring wird an die bodenseitige Gehäuseplatte der Ventilverriegelung angeschraubt und die Riegelringe sind übereinander angeordnet. Gemäß einem wesentlichen Merkmal der Erfindung ist vorgesehen, dass die Festlegung der Riegelringe in dem Arretierring durch jeweils zwei zusammenwirkende Stellschrauben erfolgt, die entgegengesetzt auf die Zähne der Riegelringe wirken.

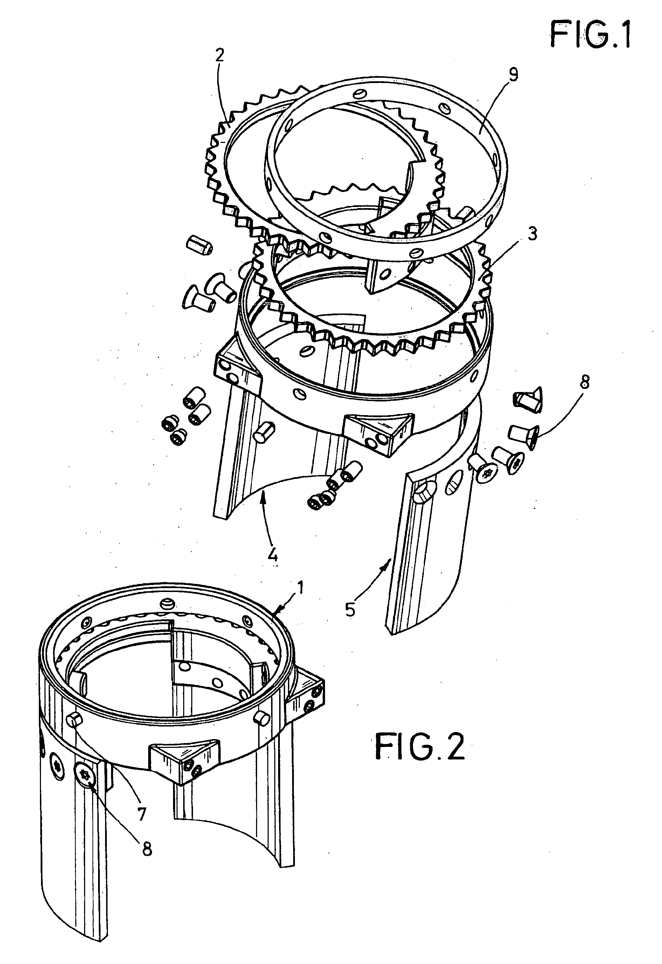

Ein Ausführungsbeispiel der Erfindung wird nachfolgend anhand der Zeichnungen erläutert. Die Zeichnungen zeigen dabei in
- Fig. 1: in einer auseinandergezogenen Darstellungsweise die Bauteile der Drehmomentstütze, in
- Fig. 2: die Drehmomentstütze im zusammengebauten Zustand und in
- Fig. 3: das Zusammenwirken zweier Stellschrauben zur Festlegung der Riegelringe.

In den Zeichnungen ist mit 1 ein Arretierring bezeichnet, der über Arretierschrauben 7 an der Unterseite der Ventilverriegelung festgelegt werden kann, die hier in entsprechender Weise ausgebildet ist. Innerhalb des Arretierringes 1 sind zwei Riegelringe 2 und 3 angeordnet, die an ihrer Außenseite gezahnt sind und Widerlagerscheiben 4 und 5 tragen. Diese Widerlagerscheiben 4 und 5 können - wie in der Zeichnung dargestellt - über Schrauben 8 an den Riegelringen 2 und 3 festgelegt werden, aber es ist auch im Rahmen der Erfindung liegend, die Riegelringe 2 und 3 einstückig und materialeinheitlich mit den Widerlagerscheiben 4 und 5 auszubilden.

Oberhalb der Riegelringe 2 und 3 ist eine Distanzscheibe 9 vorgesehen, die von den Arretierschrauben 7 durchquert wird und die hinsichtlich der Höhe die Riegelringe 2 und 3 festlegt.

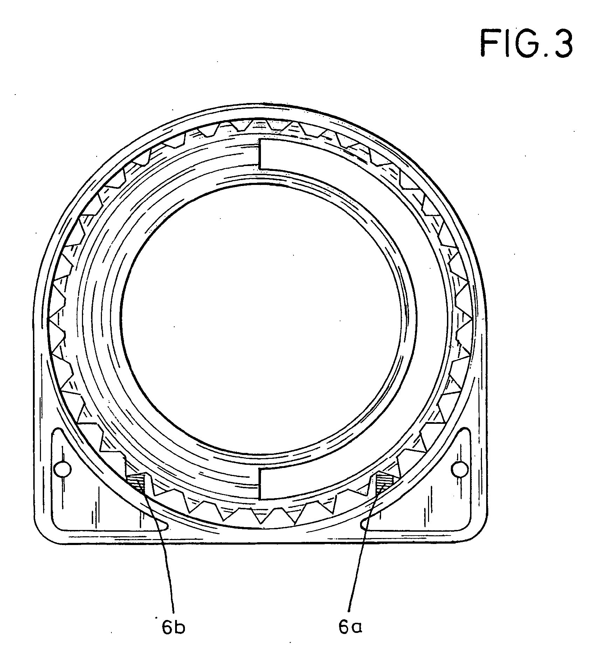

Hinsichtlich der Drehbewegungen werden die Riegelringe 2 und 3 durch Arretierschrauben 6a und 6b festgelegt, wobei Fig. 3 zeigt, dass jeweils zwei Arretierschrauben für einen Riegelring eingesetzt werden, die entgegengesetzt gerichtet sind und dadurch in unterschiedlicher Richtung zur Anlage an den Zähnen der Riegelringe kommen. Hierdurch sind die Riegelringe in beiden Richtungen drehfest festgelegt.

## Patentansprüche

1. Drehmomentstütze einer Ventilverriegelung, wobei sich die Drehmomentstütze an einem Ventil abstützt, um eine Drehung der Verriegelung gegenüber dem Ventil zu verhindern, **gekennzeichnet durch**
a) einen Arretierring (1) zum Anschluss der Drehmomentstütze an die Ventilverriegelung,
b) zwei innerhalb des Arretierrings (1) angeordnete Rie gelringe (2, 3), die je eine sich nach unten erstrecken de Widerlagerscheibe (4, 5) tragen, wobei
c) sich die Widerlagerscheiben (4, 5) nur über einen Teil des Umfanges der Riegelringe (2, 3) erstrecken, und
d) Arretierschrauben (6) zur drehfesten Festlegung der Riegelringe (2, 3) in dem Arretierring (1).

2. Drehmomentstütze nach Anspruch 1,
**dadurch gekennzeichnet,**
**dass** die Riegelringe (2, 3) an ihrer Außenseite gezahnt ausgebildet sind.

3. Drehmomentstütze nach Anspruch 1 oder 2,
**dadurch gekennzeichnet,**
**dass** der Arretierring (1) an der bodenseitigen Gehäuseplatte der Verriegelung anbringbar ist.

4. Drehmomentstütze nach einem oder mehreren der vorhergehenden Ansprüche,
**dadurch gekennzeichnet,**
**dass** die Riegelringe (2, 3) übereinander angeordnet sind.

5. Drehmomentstütze nach einem oder mehreren der vorhergehenden Ansprüche,
**dadurch gekennzeichnet,**
**dass** die Festlegung der Riegelringe (2, 3) in dem Arretierring (1) durch jeweils zwei Stellschrauben (6a, 6b) erfolgt, die entgegengesetzt auf die Zähne der Riegelringe (2, 3) wirken.

6. Drehmomentstütze nach einem oder mehreren der vorhergehenden Ansprüche,
**gekennzeichnet durch** einen Distanzring (7) zur Festlegung der Riegelringe (2, 3) innerhalb des Arretierringes (1).

## Claims

1. Torque support for a valve interlock, where the torque support is braced against a valve to prevent the interlock from turning relative to the valve, **characterised by**
a) a stop ring (1) to attach the torque support to the valve interlock,
b) two lock rings (2, 3) disposed inside the stop ring (1) each of which lock rings (2, 3) carries a counter-bearing plate (4, 5) extending downwards, where
c the counter-bearing plates (4, 5) extend over only a part of the circumference of the lock rings (2, 3), and
d) fixing screws (6) for torsion-free fixture of the lock rings (2, 3) inside the stop ring (1).

2. Torque support in accordance with claim 1, **characterised in that** the lock rings (2, 3) are toothed on the outside.

3. Torque support in accordance with claim 1 or 2, **characterised in that** the stop ring (1) can be fitted to the bottom housing plate of the interlock.

4. Torque support in accordance with one or more of the foregoing claims, **characterised in that** the lock rings (2, 3) are disposed one above the other.

5. Torque support in accordance with one or more of the foregoing claims, **characterised in that** each of the lock rings (2, 3) is fixed inside the stop ring (1) by means of two set screws (6a, 6b) which act on the teeth of the lock rings (2, 3) in opposite directions.

6. Torque support in accordance with one or more of the foregoing claims, **characterised by** a spacer ring (7) for fixing the lock rings (2, 3) inside the stop ring (1).

## Revendications

1. Bras de réaction d'un verrouillage de vanne, sachant que le bras de réaction prend appui contre une vanne pour empêcher que le verrouillage tourne par rapport à la vanne, **caractérisé par**
a) une bague de retenue (1) servant à raccorder le bras de réaction au verrouillage de la vanne.
b) deux bagues de verrouillage (2, 3), agencées à l'intérieur de la bague de retenue (1), bagues qui supportent chacune une rondelle-palier antagoniste (4, 5) s'étendant vers le bas, sachant que
c) les rondelles-paliers antagonistes (4, 5) ne s'étendent que sur une partie de la circonférence des bagues de verrouillage (2, 3), et par
d) des vis de retenue (6) pour immobiliser et empêcher de tourner les bagues de verrouillage (2, 3) dans la bague de retenue (1).

2. Bras de réaction selon la revendication 1, **caractérisé en ce que** le côté extérieur des bagues de verrouillage (2, 3) est configuré centré.

3. Bras de réaction selon la revendication 1 ou 2, **caractérisé en ce que** la bague de retenue (1) peut être fixée contre le fond de la plaque du carter du verrouillage.

4. Bras de réaction selon l'une ou plusieurs des revendications précédentes, **caractérisé en ce que** les bagues de verrouillage (2, 3) sont agencées les unes au-dessus des autres.

5. Bras de réaction selon l'une ou plusieurs des revendications précédentes, **caractérisé en ce que** l'immobilisation des bagues de verrouillage (2, 3) dans la bague de retenue (1) a lieu au moyen de respectivement deux vis de réglage (6a, 6b) qui agissent en sens opposé sur les dents des bagues de verrouillage (2, 3).

6. Bras de réaction selon l'une ou plusieurs des revendications précédentes, **caractérisé par** une bague d'écartement (7) servant à immobiliser les bagues de verrouillage (2, 3) à l'intérieur de la bague de retenue (1).
